# EUROPÄISCHE PATENTSCHRIFT

(11) **EP 0 701 975 B1**
(45) Veröffentlichungstag und Bekanntmachung des Hinweises auf die Patenterteilung: **07.10.1998**
(21) Anmeldenummer: 95111670.6
(22) Anmeldetag: 25.07.1995
(51) Int. Cl.: C03B 19/14, C03B 37/014, C03B 19/06

(54) **Verfahren zum Sintern von Hohlzylindern aus Siliciumdioxid - Soot und Vorrichtung zum Sintern derartiger Hohlzylinder**
Process for sintering hollow tubes of silica soot and device for sintering such hollow tubes
Procédé de frittage de barreaux creux en suie de silice et dispositif pour le frittage de tels barreaux creux

(30) Priorität: 15.09.1994 DE 4432806
(43) Veröffentlichungstag der Anmeldung: 20.03.1996
(73) Patentinhaber: Heraeus Quarzglas GmbH, 63450 Hanau (DE)
(72) Erfinder: Ruppert, Klaus, Dr., D-63477 Maintal (DE); Christiansen, Uwe, D-63571 Gelnhausen (DE); Hünermann, Michael Dr., D-63755 Alzenau (DE); Dittmer, Klaus, D-63571 Gelnhausen (DE); Steinkohl, Anton, D-63584 Gründau (DE)
(74) Vertreter: Kühn, Hans-Christian

(56) Entgegenhaltungen:
- DE-C- 4 432 806
- US-A- 4 157 906
- US-A- 4 362 545
- US-A- 5 076 824
- PATENT ABSTRACTS OF JAPAN vol. 12, no. 139 (C-491), 27.April 1988 & JP-A-62 256733 (HITACHI CABLE CO. LTD.), 9.November 1987,
- PATENT ABSTRACTS OF JAPAN vol. 9, no. 91 (C-277), 19.April 1985 & JP-A-59 223242 (SHIN ETSU ), 15.Dezember 1984,
- PATENT ABSTRACTS OF JAPAN vol. 13, no. 111 (C-577), 16.März 1989 & JP-A-63 285128 (HITACHI CABLE CO. LTD.), 22.November 1988,

## Beschreibung

Die Erfindung betrifft ein Verfahren zum Sintern eines Hohlzylinders aus Siliciumdioxid - Soot, wobei der Hohlzylinder mittels einer Haltevorrichtung in vertikaler Ausrichtung gehalten und kontinuierlich einer Erhitzungszone zugeführt und gesintert wird. Weiterhin betrifft die Erfindung eine Vorrichtung zum Sintern eines Hohlzylinders aus Siliciumdioxid - Soot in vertikaler Ausrichtung, mit einem von außen in die Bohrung des Hohlzylinders eingreifenden, langgestreckten Trägerkörper, der mit einem Ende mit einem eine Haltefläche aufweisenden Haltefuß verbunden ist, und mit einer Heizeinrichtung.

Die Herstellung von Vorformen für optische Fasern und die von Vorformen für Ofen-Bauteile für die Halbleitertechnik erfolgt häufig über ein Zwischenprodukt, in dem ein Hohlzylinder aus Siliciumdioxid - Soot vorliegt. Diese sogenannten "Sootkörper" sind mechanisch instabil und daher, insbesondere bei großem Volumen und hohem Gewicht, nur schwer handhabbar. Zudem werden für die Einsatzzwecke in der optischen Nachrichtentechnik und in der Halbleitertechnik höchste Anforderungen an die Reinheit der Sootkörper gestellt, so daß deren Handhabung bei den weiteren Weiterverarbeitungsschritten, beispielsweise einer Temperatur- oder einer Gasbehandlung, durch eine eingeschränkte Werkstoffauswahl für die benötigten Hilfsmittel weiter erschwert wird.

Bei der Behandlung derartiger Sootkörper in einem Behandlungsraum, wie beispielsweise in einem Sinterofen, ergibt sich das Problem der Halterung der mechanisch nur wenig belastbaren Sootkörper. Bei dem aus der US-PS 4,251,251 bekannten Verfahren besteht die Halterung aus einem aus Platindrähten geformten Bügel, an dem der hohlzylindrische Sootkörper aufgehängt wird. Zur Befestigung der Platindrähte am Sootkörper weist die Hohlzylinderwandung in ihrem oberen Bereich zwei waagerecht verlaufende Durchgangsbohrungen auf, durch die hindurch die Platindrähte geführt sind. Zum Sintern wird der Sootkörper kontinuierlich einem vertikal orientierten Sinterofen zugeführt. Dabei erweicht der Sootkörpers in einer Erweichungszone. Die die Platindrähte geführt sind. Zum Sintern wird der Sootkörper kontinuierlich einem vertikal orientierten Sinterofen zugeführt. Dabei erweicht der Sootkörpers in einer Erweichungszone. Die Erweichungszone beginnt am unteren Ende des Sootkörpers. Mit dem Absenken des Sookörpers in den Sinterofen wandert die Erweichungszone im Sootkörper kontinuierlich nach oben. Dabei nimmt das an der Erweichungszone hängende Gewicht des bereits gesinterten Teils des Sootkörpers kontinuierlich zu. Aufgrund der geringen Viskosität in der Erweichungszone verlängert sich der Sootkörper daher beim Absenken unter seinem eigenen Gewicht. Das Verfahren ist daher insbesondere zum Sintern großvolumiger und schwerer Sootkörper nicht geeignet.

Aus der DE-A1 29 06 070 ist eine weitere Vorrichtung zur Halterung eines Hohlzylinders aus Siliciumdioxid - Soot in vertikaler Ausrichtung während des Kollabierens und Faserziehens bekannt. Dabei wird in die Bohrung des Rohlings ein ca. 50 mm langes Rohrstück aus Quarzglas eingesetzt, dessen Außendurchmesser in etwa dem Innendurchmeser des Rohlings entspricht und das an seinem zur Einführung in den Rohling bestimmten Ende höckerartige Verdickungen aufweist. Zur Verankerung des Rohrteils in der Bohrung werden die höckerartigen Verdickungen in der Bohrung um ca. 90° verdreht. An dem aus der Bohrung herausragenden Ende des Rohrteils ist ein weiteres Quarzglasrohr angesetzt, an dem Antriebsmittel zum Absenken des Rohlings in den Ofen angreifen.

Aus der US-Patentschrift 4,362,545 ist eine weitere gattungsgemäße Halterung bekannt, bei der eine im wesentlichen hülsenförmige Handhabe aus Quarzglas in die Bohrung des Sootkörpers eingebettet ist. An ihrem im Sootkörper eingreifenden Ende ist die Handhabe mit einer umlaufenden, ringförmigen Verdickung versehen, die als Hinterzahnung wirkt und ein Abrutschen der Handhabe aus der Bohrung verhindert. Das aus der Bohrung herausragende Ende der Hülse ist als Konus ausgebildet, über den eine Vorrichtung zum Aufhängen des Sootkörpers an der Handhabe befestigt werden kann. Das Einbetten der Handhabe soll während des Aufbaus des Sootkörpers erfolgen. Hierzu wird die hülsenformige Handhabe auf den Abscheidedorn aufgeschoben. Die sich auf dem Dorn niederschlagenden Sootpartikel sollen dabei gleichzeitig das eine Ende der Hülse aufgeschobenen Hülse überdecken.

Mit den bekannten Haltevorrichtungen können Hohlzylinder aus Siliciumdioxid - Soot beispielsweise zum Sintern in einem Sinterofen aufgehängt werden. Das Anbringen der Halterungen ist aber sehr aufwendig und erzeugt störenden Abrieb. Die bekannten Halterungen sind nur geeignet für kleinere Sootkörper. Bei großvolumigen und schweren Sootkörpern reicht die Aus Patent Abstracts of Japan, Band 9, Nr. 91 (C-277), von JP-A 59 22 32 42 ist ein Verfahren zum Sintern eines Sootkörpers in vertikaler Orientierung und eine Vorrichtung für seine Durchführung bekannt. Dabei wird der auf einem Dorn abgeschiedene Sootkörper mittels des Dornes in einem vertikal orientierten Ofen gehalten. Der untere Teil des Dornes ragt aus dem Ofen heraus und wird in einer Aufnahme gelagert.

Eine Vorrichtung gemäß der eingangs angegebenen Gattung ist in der US-A 5,076,824 beschrieben. Bei der bekannten Vorichtung ist ein Haltefuß vorgesehen, auf dem der zu sinternde hohlzylindrische Sootkörper in vertikaler Orientierung stehend gehalten wird. Der Haltefuß ist mit einem Dorn verbunden, der sich durch die Bohrung des Sootkörpers nach oben erstreckt. Haltefuß und Dorn sind mit einer Schicht aus pyrolytisch hergestelltem Graphit oder pyrolytisch hergestelltem Bornitrid versehen. Zum Sintern des Sootkörpers ist ein Ofen vorgesehen, der den Sootkörper umgibt. Aufgrund ihres hohen Gewichtes sind beim Sintern schwerer Sootkörper unter Verwendung der bekannten Vorrichtung Verformungen zu befürchten.

Der vorliegenden Erfindung liegt die Aufgabe zugrunde, ein für das Sintern großvolumiger Hohlzylinder aus Siliciumdioxid - Soot geeignetes Verfahren anzugeben sowie eine Vorrichtung zur Ducrhführung des Verfahrens bereitzustellen, die einfach anzubringen und zu entfernen ist und die eine betriebssichere Handhabung gewährleistet.

Hinsichtlich des Verfahrens wird diese Aufgabe ausgehend von dem eingangs genannten Verfahren erfindungsgemäß dadurch gelöst, daß der Hohlzylinder in einem zeitlichen Sinterabschnitt, während dem er im Bereich seines oberen Endes gesintert wird, überwiegend oder ausschließlich stehend gehalten wird, indem er von seinem unteren Ende aus gestützt wird, und in einem weiteren Sinterabschnitt, während dem er im Bereich seines unteren Endes gesintert wird, überwiegend oder ausschließlich im Bereich seines oberen Endes hängend gehalten wird.

Bei Raumtemperatur ist der zu sinternde Hohlkörper (im folgenden auch als "Sootkörper" bezeichnet) im wesentlichen formstabil. Das heißt, er kann vertikal aufgestellt oder aufgehängt werden, ohne daß er sich unter seinem eigenen Gewicht plastisch verformt. Bei Temperaturerhöhung erweicht der Siliciumdioxid - Soot in der Erweichungszone. Seine Viskosität nimmt ab, so daß sich der Sootkörper unter den auf die Erweichungszone einwirkenden Kräften verformt. Neben der Schwerkraft wirken dabei auch Verformungskräfte infolge der Volumenkonraktion auf den Sootkörper ein. Dieser weist eine Dichte von nur ca. 30% des festen Quarzglases auf. Da das Sintern kontinuierlich erfolgt, wandert die Erweichungszone von einem Ende des Sootkörpers zu dem gegenüberliegenden Ende. Besonders kritisch hinsichtlich der Verformung ist für einen hängenden Sootkörper derjenige zeitliche Sinterabschnitt, bei dem die Erweichungszone im Bereich des oberen Endes angelangt ist, weil dann das Gewicht des unteren Sootkörper-Abschnittes an der Erweichungszone zieht. Der Sootkörper kann der Erhitzungszone aber auch vertikal stehend zugeführt werden. Dann ist umgekehrt derjenige Sinterabschnitt hinsichtlich der Verformung besonders kritisch, bei dem sich die Erweichungszone im unteren Teil des Sootkörpers befindet, weil dann das Gewicht des oberen Teils des Sootkörpers auf der Erweichungszone lastet. Dabei sind die jeweiligen Verformungen unabhängig von der Zuführrichtung des Sootkörpers in die Erhitzungszone.

Bei einer ersten Alternative des erfindungsgemäßen Verfahrens wird der Sootkörper der Erhitzungszone in einem Sinterabschnitt stehend und in einem anderen Sinterabschnitt hängend zugeführt. Dadurch wird erreicht, daß vor demjenigen Sinterabschnitt, in dem die Verformung bei dem stehenden Sootkörper einsetzen oder deutlich zunehmen würde, von der stehenden Halterung auf die hängende Halterung des Sootkörpers übergegangen werden kann - oder umgekehrt, daß vor demjenigen Sinterabschnitt, in dem die Verformung bei dem hängenden Sootkörper einsetzen oder deutlich zunehmen würde, von der hängenden Halterung auf die stehende Halterung des Sootkörpers übergegangen werden kann. Dadurch werden auf die Erweichungszone einwirkende Druck- oder Zugkräfte möglichst gering gehalten. Dies ermöglicht ein kontinuierliches Sintern des Sootkörpers über seine Länge ohne gravierende Verformungen. Der Übergang von der stehenden zur hängenden Halterung, oder umgekehrt, von der hängenden zur stehenden Halterung kann kontinuierlich erfolgen, so daß während einer Übergangszeit beide Arten der Halterung wirksam sind.

Bei einer alternativen Ausführungsweise des erfindungsgemäßen Verfahrens wird der Sootkörper der Erhitzungszone auf einem Träger stehend und gleichzeitig an einer Aufhängung hängend zugeführt. Dabei greift der Träger im unteren Bereich, die Aufhängung am oberen Bereich des Sootkörpers an. Wegen der Längenkontraktion des Sootkörpers während des Sinterns ist es bei dieser Verfahrensweise erforderlich, den Träger und/oder die Aufhängung entsprechend der Längenkontraktion in Bezug aufeinander nachzuregeln, das heißt aufeinander zu zubewegen. Durch eine geeignete Regelung dieser Bewegung kann erreicht werden, daß der Sootkörper in demjenigen Sinterabschnitt, in dem er im Bereich seines oberen Endes erweicht ist, überwiegend stehend gehalten, und umgekehrt, in demjenigen Sinterabschnitt, in dem er im Bereich seines unteren Endes erweicht ist, der Haupanteil der Halterung von der Aufhängung übernommen wird.

Unter dem Ausdruck Sinterabschnitt wird derjenige zeitliche Abschnitt des gesamten Sintervorganges verstanden, in dem die Verformung des Sootkörpers unter seinem eigenen Gewicht bei der jeweiligen Art der Halterung (stehend oder hängend) in akzeptablen Grenzen bleibt. Da die Verformung allmählich einsetzt und mit zunehmender Temperatur und Sinterdauer stärker wird, sind Anfang und Ende eines jeweiligen Sinterabschnittes nicht genau festlegbar. Die akzeptable Verformung hängt auch von der Art der Verformung und vom Einsatzzweck des gesinterten Sootkörpers ab. So kann beispielsweise eine durch die stehende Halterung bedingte Stauchung des Sootkörpers für bestimmte Einsatzzwecke schädlicher sein, als eine durch die hängende Halterung verursachte Streckung.

Das erfindungsgemäße Verfahren ermöglicht das Sintern insbesonde von großvolumigen und schweren Sootkörpern, bei denen ansonsten Verformungen aufgrund des eigenen Gewichtes zu befürchten sind.

Der Sootkörper kann mit seinem unteren Ende beginnend in die Erhitzungszone eingeführt werden, oder beginnend mit seinem oberen Ende. Bei der zuerst genannten Variante wird er im ersten Sinterabschnitt hängend gesintert, im zweiten Sinterabschnitt stehend. Es wird aber die zuletzt genannte Verfahrensvariante bevorzugt, wonach der Sootkörper mit seinem oberen Ende beginnend in die Erhitzungszone eingeführt wird.

Ein wesentlicher Vorteil dieser Verfahrensvariante besteht darin, daß der Übergang von dem ersten Sinterabschnitt auf den zweiten Sinterabschnitt so eingerichtet sein kann, daß die hängende Halterung des Sootkörpers erst dann überwiegend oder ausschließlich zum Tragen kommt, wenn das obere Ende des Sootkörpers bereits gesintert ist und die Erhitzungszone verlassen hat. Die Aufhängung greift daher an einem verfestigten Bereich des Sootkörpers an. Die Gefahr, daß die Aufhängung ausbricht, ist daher gering. Das Verfahren ist besonders zuverlässig.

Besonders bewährt hat sich eine Verfahrensweise, bei der am zu sinternden Hohlzylinder im Bereich seines oberen Endes ein Aufhängeelement angreift, bei der der Hohlzylinder im Bereich seines unteren Endes von einem Träger abgestützt wird, und bei der ein unterhalb des Aufhängeelementes und relativ zum Träger ortsfest angeordnetes Stützelement vorgesehen ist, auf das sich während des ersten Sinterabschnittes das Aufhängeelement infolge der Längenkontraktion des Hohlzylinders zubewegt und auf das es sich zu Beginn des zweiten Sinterabschnittes abstützt. Diese Verfahrensweise ermöglicht einen besonders eleganten Übergang von der stehenden Halterung in die hängende Halterung aufgrund der Längenkontraktion des Sootkörpers während des Sinterns. Es ist bekannt, daß die Länge eines Sootkörpers beim Sintern abnimmt. Die Längenkontraktion hängt unter anderem von der Dichte des Kieselsäurerußes ab und kann bis zu 30 % der ursprünglichen Länge ausmachen. Durch Verwendung der angegebenen Haltevorrichtung kann der zunächst vertikal stehende, in seiner Länge schrumpfende Sootkörper sich selbst aufhängen, indem er sich das am Sootkörper besfestigte Aufhängeelment auf dem Stützelement abstützt und dann bei weiterer Längenkontraktion der Sootkörper mit seinem unteren Ende vom Träger abhebt..

Dabei wird ein Verfahren bevorzugt, bei dem als Aufhängeelement ein Haltering am Hohlzylinder innerhalb dessen Innenbohrung befestigt wird, und bei dem innerhalb der Innenbohrung des Hohlzylinders ein sich auf dem Träger abstützendes Stützelement, eingesetzt wird, das ein oberes, dem Aufhängeelement zugewandtes Ende aufweist, auf dem sich der Haltering im zweiten Sinterabschnitt abstützt. Durch die Verwendung des Halteringes wird sichergestellt, daß die Innenbohrung des Sootkörpers nach außen hin offen bleibt, so daß sie belüftet ist. Das Stützelement kann als Rohrstück oder als Vollzylinder ausgebildet sein. Das Stützelement kann sich auch von oben nach unten konisch oder stufenweise erweitern. Da der Haltering sich durch die Längenkontraktion des Sootkörpers in Richtung auf das obere Ende des Stützelementes zubewegt und sich zu Beginn des zweiten Sinterabschnittes darauf abstützt, hebt sich bei einer weiteren Längenkontraktion das untere Ende des Sootkörpers von dem Träger ab, so daß er sich selbst am Haltering aufhängt. Vorteilhafterweise besteht das Stützelement aus Graphit und weist eine glatte äußere Oberfläche auf, so daß der kollabierende Sootkörper sich auf dem Stützelement auflegt und die Innenbohrung des fertig gesinterten Sootkörpers vom Außendurchmesser des Stützelementes bestimmt wird.

Der Zeitpunkt des Überganges vom ersten auf den zweiten Sinterabschnitt wird in erster Linie bestimmt durch den Abstand zwischen dem Aufhängeelementes und dem oberen Ende des Stützelementes. Es hat sich als vorteilhaft erwiesen, die beim Sintern des Hohlzylinders zu erwartende Längenkontraktion zu ermitteln und dem Abstand zwischen dem Halteelement und dem oberen Ende des Stützelementes auf einen Wert im Bereich des 0,3 bis 0,8-fachen der ermittelten Längenkontraktion einzustellen. Dadurch wird gewährleistet, daß der Sootkörper sich erst dann von dem Träger abhebt, wenn sein oberes Ende die Erhitzungszone verlassen hat und bereits verfestigt ist. Dies gilt mit der Maßgabe, daß die Abmessung der Erhitzungszone, in Längsachsenrichtung des Hohlzylinders gesehen, kleiner ist als diejenige Länge des Sootkörpers, die eine dem gewählten Abstand zwischen dem Halteelement und dem oberen Ende des Stützelementes entsprechende Längenkontraktion erzeugt.

Hinsichtlich der Vorrichtung wird die oben angegebene Aufgabe ausgehend von der gattungsgemäßen Vorrichtung erfindungsgemäß dadurch gelöst, daß ein sich auf den Haltefuß abstützendens, sich in Längsachsenrichtung des Trägerkörpers nach oben erstreckendes Stützelement vorgesehen ist, das beim Kollabieren des Hohlzylinders als Abrutschsicherung wirkend im Bereich des oberen Endes des Hohlzylinders angreift, und daß in Richtung der Längsachse des Hohlzylinders gesehen, die Länge der Heizeinrichtung kürzer ist als die Länge des Hohlzylinders.

Der Haltefuß dient zur Aufnahme des in vertikaler Ausrichtung zu haltenden Hohlzylinders. Hierfür ist er mit einer Haltefläche versehen, auf der der Hohlzylinder mit seiner unteren Stirnseite aufsitzt. Der Haltefuß ist mit dem im wesentlichen zylinderförmigen Trägerkörper verbunden. Dabei ragt der Trägerkörper in die Bohrung des Hohlzylinders hinein. Die Außenabmessungen des Trägerkörpers können an den Innendurchmesser des Hohlzylinders angepaßt werden, so daß der Trägerkörper zur stabilen Halterung des Hohlzylinders auf dem Haltefuß beitragen kann. Hierfür kann es genügen, den Trägerkörper mit einer Länge auszubilden, die kürzer ist als diejenige des zu haltenden Hohlzylinders. Zum Transport oder zum Halten des Hohlzylinders erforderliche Kräfte können in diesem Fall am Haltefuß angreifen. Die Haltefläche ist vorteilhafterweise waagerecht orientiert.

Das Stützelement kann beispielsweise als Hüllrohr ausgebildet sein, das sich entlang des Trägerkörpers nach oben erstreckt. Wesentlich ist, daß das Stützelement beim Kollabieren des Hohlzylinders mit dessen oberem Ende derart in Wirkverbindung steht, daß es als Abrutschsicherung wirkt. Dabei kann sich der kollabierende Hohlzylinder oder ein mit dem Hohlzylinder im Bereich seines oberen Endes verbundener Haltering mit dem Stützelement verhaken.

Um ein vom oberen Ende oder vom unteren Ende des Hohlzylinders beginnendes Sintern zu ermöglichen, ist es wesentlich, daß eine Heizeinrichtung vorgesehen ist, die kürzer ist als die Länge des Hohlzylinders.

Besonders bewährt hat sich eine Vorrichtung, bei der der Trägerkörper eine Länge aufweist, die größer ist als die Länge des zu haltenden Hohlzylinders. Dabei kann der Trägerkörper beidseitig aus der Bohrung des Hohlzylinders herausragen, so daß in diesem Fall die zum Transport oder zum Halten des Hohlzylinders erforderlichen Kräfte auch an dem dem Haltefuß gegenüberliegenden und aus der Bohrung herausragenden Teil des Trägerkörpers angreifen können.

Dabei hat es sich als besonders günstig erwiesen, den Trägerkörper über mindestens einen Teil seiner Länge mit einem gasdurchlässigen Hüllrohr zu versehen. Durch Verwendung von Hüllrohren mit gleichem Innendurchmesser aber unterschiedlichen Außendurchmessern ist es möglich, bei gleichem Trägerkörperdurchmesser den in die Zentral-Bohrung des Hohlzylinders hineinragenden Teil der Haltevorrichtung an unterschiedliche Innendurchmesser des Hohlzylinders oder eines daraus herzustellenden Quarzglasrohres anzupassen. Vorteilhafterweise besteht das Hüllrohr aus einem Werkstoff, der keine Verunreinigungen an den Kieselsäure-Hohlzylinder abgibt. Es kann als Barriere für Verunreigungen aus dem Trägerkörper wirken. Durch Verwendung des Hüllrohres wird die Palette geeigneter Werksstoffe für den Trägerkörper erweitert. Da das Hüllrohr selbst keine tragende Funktion bei der Halterung übernehmen muß, kann es auch aus einem Werkstoff mit vergleichweise geringer Festigkeit bestehen. Umgekehrt kann der Werkstoff für den Trägerkörper hinsichtlich der Festigkeit optimimal ausgewählt werden. Bei Verfahren, bei denen der Hohlzylinder auf das Hüllrohr aufkollabiert wird, legt der Außendurchmesser des Hüllrohres den Innendurchmesser des kollabierten Rohres fest. Dabei gewährleistet die Gasdurchlässigkeit des Hüllrohres, daß beim Kollabieren des Hohlzylinders entstehende oder in den Poren des Kieselsäurerußes vorhandene Gase entweichen könen, und zwar auch dann noch, wenn der kollabierte Hohlzylinder bereits am Hüllrohr anliegt. Das Hüllrohr kann aus einem Teil oder aus mehreren, miteinander lösbar verbundenen Teilen bestehen.

Die Gasdurchlässigkeit des Hüllrohres kann durch Wahl eines porösen Werkstoffes gewährleistet werden. Besonders gute Ergebnisse werden mit einem Hüllrohr erzielt, das eine offene Porosität, vorzugsweise im Bereich von 10 Vol.-% bis 20 Vol.-% aufweist.

Als besonders geeigneter Werkstoff für das Hüllrohr hat sich Graphit erwiesen. Graphit ist in sehr hoher Reinheit im Handel erhältlich. Auch seine Porosität ist nach Bedarf einstellbar. Aufgrund des im Vergleich zu Quarzglas hohen thermischen Ausdehnugskoeffizienten von Graphit schrumpft das Graphit-Hüllrohr beim Abkühlen stärker als das aufkollabierte Quarzglasrohr, so daß dieses leicht von dem Hüllrohr zu trennen ist. In dieser Hinsicht besonders geeignet ist eine Ausführungsform des Hüllrohres, mit einer sich konisch verjüngenden Mantelfläche. Dies erleichtert die Entnahme des Quarzglasrohhres nach dem Verglasen zusätzlich.

Es hat sich auch eine Vorrichtung bewährt, bei der das Hüllrohr eine sich von unten nach oben stufenweise verjüngende Mantelfläche aufweist. Zwischen den einzelnen Stufen weist das Hüllrohr somit Absätze auf. Dabei können die einzelnen Stufen zwischen den Absätzen sich konisch erweitern. Beim Aufkollabieren des Sootkörpers auf das Hüllrohr bieten die Absätze Aufhängepunkte, die von dem erweichten Quarzglas umflossen werden und an denen sich das abgekühlte, feste Quarzglas verhakt. Beim einem vom oberen Ende des Sootkörper beginnenden und nach unten kontinuierlich fortschreitenden Sintern wird dadurch der untere Teil des Sootkörpers von dem darüber befindlichen Gewicht teilweise entlastet. Zur Erleicherung des Ausbaus des Hüllrohres besteht dieses vorteilhafterweise aus mehreren, miteinander lösbar verbundenen Teilen.

Als vorteilhaft hat es sich erwiesen, zwischen der Außenwand des Trägerkörpers und der Innenwand des Hüllrohres einen Spalt mit einer Spaltweite im Bereich zwischen 0,3 mm und 1 mm, vorzugsweise von weniger als 0,8 mm vorzusehen. Der Spalt gewährleistet die Abfuhr der beim Kollabieren des Kieselssäure-Hohlzylinders entstehenden und entweichenden Gase und verhindert dadurch die Bildung von Blasen im kollabierten Quarzglasrohr. Dabei ist es günstig, die Spaltweite möglichst klein zu wählen, um die Stütz- und Haltefunktion des Trägerkörpers nicht zu beeinträchtigen. Der Spalt kann auch evakuiert von einem inerten Spülgas durchspült werden.

Es wird eine Ausführungsform der Haltevorrichtung bevorzugt, bei der der Trägerkörper aus kohlefaserverstärktem Graphit (CFC) besteht. Dieser Werkstoff verbindet hohe Festigkeit und Temperaturbeständigkeit mit weitgehender chemischer Inertheit gegenüber Siliciumdioxid - Soot und Quarzglas. Die hohe Festigkeit von CFC ermöglicht es, den Querschnitt des Trägerkörpers klein zu halten. Aufgrund seiner, durch die Faserstruktur bedingten, im allgemeinen rauhen Oberfläche haftet CFC jedoch leicht an Glas, so daß das Entfernen des Trägerkörpers von einem darauf aufkollabierten Glasrohr problematisch sein kann. Ein Anhaften des kollabierten Glasrohres wird durch Verwendung eines erfindungsgemäßen Hüllrohres vermieden. Dabei hat sich insbesondere ein Hüllrohr aus Graphit, das hinsichtlich seiner thermischen Ausdehnung an den Trägerkörper aus CFC gut angepaßt ist, als besonders vorteilhaft erwiesen. Insbesondere in einer Ausführungsform der Haltevorrichtung, in der dem Trägerkörper im wesentlichen die tragende Funktion zukommt ist dieser vorteilhafterweise als Vollzylinder auszugebildet.

Es hat sich als günstig erwiesen, die Aufnahmefläche des Haltefußes mit einer zentralen Öffnung zu versehen, in die der Trägerkörper mit dem einen Ende eingreift. Dies gewährleistet eine einfache Zentrierung des zu haltenden Hohlzylinders auf dem Haltefuß. Insbesondere hinsichtlich einer einfachen Befestigung und Entnahme des Hohlzylinders ist es vorteilhaft, die Öffnung mit einem Innengewinde und das in die Öffnung eingreifende Ende des Trägerkörpers mit einem Außengewinde zu versehen.

Ausführungsbeispiele der Erfindung sind in der Zeichnung dargestellt und werden nachfolgend näher erläutert. In der Zeichnung zeigen in schematischer Darstellung im einzelnen:
- **Figur 1:**: eine erfindungsgemäße Haltevorrichtung mit einem darauf gahaltenen Sootkörper,
- **Figur 2:**: eine weitere Ausführungsform der erfindungsgemäßen Haltevorrichtung mit einem darauf gahaltenen Sootkörper,
- **Figur 3:**: eine weitere Ausführungsform der erfindungsgemäßen Haltevorrichtung mit einem darauf gahaltenen Sootkörper,
- **Figur 4:**: eine weitere Ausführungsform der erfindungsgemäßen Haltevorrichtung mit einem darauf gahaltenen Sootkörper in einem Sinterofen vor Beginn eines ersten Sinterabschnittes und
- **Figur 5:**: die in Figur 5 dargestellte Haltevorrichtung mit dem darauf gahaltenen Sootkörper während eines späteren Sinterabschnittes

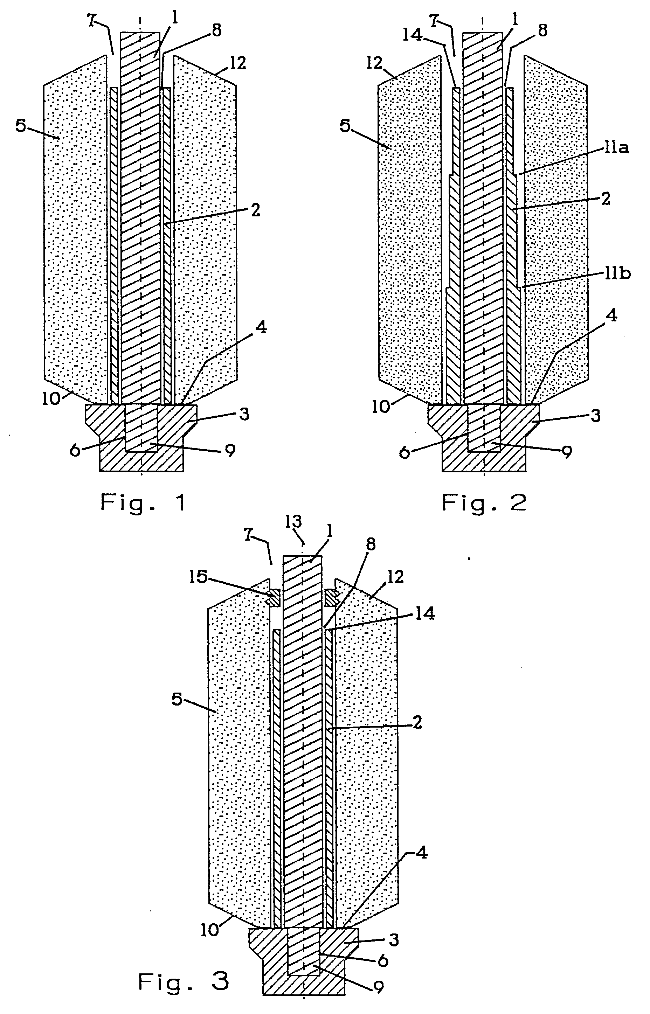

Die Haltevorrichtung gemäß Figur 1 weist eine stabförmige Tragestange 1 aus CFC, ein Hüllrohr 2 aus Graphit sowie einen Haltefuß 3 aus Graphit auf. Der Haltefuß 3 dient zur Aufnahme der gesamten Anordnung in einem Behandlungsraum, wie beispielsweise einem Ofen (nicht dargestellt). Der Haltefuß 3 ist mit einer waagerecht orientierten Aufnahmefläche 4 versehen, auf die ein hohlzylinderförmiger Sootkörper 5 aus Siliciumdioxid - Soot mit seinem unteren Ende 10 aufgesetzt ist. Die Aufnahmefläche 4 ist zentral mit einer mit einem Innengewinde ausgebildeten Bohrung 6 versehen, in die der Tragestange 1 eingreift. Hierzu weist die Tragestange 1 an ihrem dem Haltefuß 3 zugewandten Ende einen Zapfen 9 mit einem Außengewinde auf. Die Tragestange 1 erstreckt sich durch die Innenbohrung 7 des Sootkörpers 5. Zum Hantieren der Haltevorrichtung dient der über das obere Ende 12 des Sootkörpers 5 hinausragende Teil der Tragestange 1. Dabei wird das Gewicht des Sootkörpers 5 über den Haltefuß 3 von der Tragestange 1 aufgenommen.

Aufgrund der Zugfestigkeit der CFC-Tragestange 1 ist es möglich, diese mit einem relativ kleinen Durchmesser auszubilden. Im Ausführungsbeispiel beträgt ihr Durchmesser 30 mm. Zwischen der Innenwand des Hüllrohres 2 und der Tragestange 1 ist ein Spalt von etwa 0,8 mm vorgesehen. Das Hüllrohr 2 weist einen Außendurchmesser von etwa 40 mm und eine etwas kürzere Länge als die Tragestange 1 auf. Seine Porosität beträgt etwa 15 %. Das Hüllrohr aus reinem Graphit verhindert, daß Verunreinigungen von der Tragestange 1 in den Sootkörper 5 abgegeben werden. Der auf den Haltefuß 3 aufgesetzte Sootkörper 5 hat einen Innendurchmesser von ca. 60 mm und ein Gewicht von etwa 100 kg. Er ist etwas kürzer als die Tragestange 1 und etwas länger als das Hüllrohr 2. Der Sootkörper 5 kann mittels der beschriebenen Haltevorrichtung transportiert und in einem Behandlungsraum gehalten werden. Hierzu kann beispielsweise ein (in der Zeichnung nicht dargestelltes) Werkzeug an dem aus dem Sootkörper 5 herausragenden Teil der Tragestange 1 angreifen.

Nachfolgend wird ein Verfahren zum Kollabieren des Sootkörpers 5 unter Verwendung der erfindungsgemäßen Vorrichtung beispielhaft beschrieben. Hierzu wird ein Sootkörper 5 auf die Haltevorrichtung montiert, in einen Ofen eingebracht und dort mittels des Haltefußes 3 fixiert. Während des Erhitzens verglast der Sootkörper 5 und schrumpft dabei auf das Graphit-Hüllrohr 2 auf. Dabei an der Grenzfläche zwischen dem Sootkörper 5 und dem Hüllrohr 2 sich bildende oder vorhandene Gase werden durch die Poren des Hüllrohres 2 bis zum Spalt 8 geführt, wo sie entweichen können. Dadurch wird eine Blasenbildung im sich bildenden Quarzglasrohr vermieden. Der Außendurchmesser des Hüllrohres bestimmt den Innendurchmesser des erhaltenen Quarzglasrohres, da der Sootkörper 5 auf das Hüllrohr 2 aufschrumpft. Durch die großen Unterschiede im Ausdehnungskoeffizienten zwischen Quarzglas und Graphit lockert sich das Hüllrohr 2 beim Erkalten und kann dann leicht entfernt werden.

Soweit nachfolgend in den Figuren 2 bis 5 die gleichen Bezugsziffern wie in Figur 1 verwendet werden, so sind damit gleiche oder äquivalente Bauteile oder Bestandteile der Halltevorrichtung bezeichnet, wie sie anhand Figur 1 für die gleichen Bezugsziffern erläutert sind.

Bei der in Figur 2 gezeigten Vorrichtung ist ebenfalls eine stabförmige Tragestange 1 aus kohlenfaserverstärktem Kohlenstoff vorgesehen, der mit einem Zapfen 9 versehen ist, mittels dem er in einen Haltefuß 3 eingeschraubt ist. Der Haltefuß 3 weist eine waagerecht orientierte, plane Aufnahmefläche 4 auf, auf der ein hohlzylindrischer Sootkörper 5 mit seiner unteren Stirnseite 10 steht. Innerhalb der Innenbohrung 7 des Sootkörpers 5 ist ein Hüllrohr 2 angeordnet, das die Tragestange 1 über einen Teil ihrer Höhe umschließt. Zwischen dem Hüllrohr 2 und der Tragestange 1 ist ein Spalt 8 von ca. 0,5 mm vorgesehen. Der Außendurchmesser des Hüllrohres 2 nimmt von oben nach unten in Abstufungen von etwa 1 mm stufenweise zu. Die durch die Abstufung entstehenden Absätze sind in der Figur 2 mit den Bezugsziffern 11a, 11b bezeichnet. In dem Ausführungsbeispiel gemäß Figur 2 sind zwei derartige Absätze 11a, 11b vorgesehen.

Der Sootkörper 5 wird, mit seinem oberen Ende 12 beginnend, in einen (in Figur 2 nicht dargestellten) Sinterofen kontinuierlich eingeführt. Der in dem Sinterofen kollabierende Sootkörper 5 legt sich dabei von seinem oberen Ende 12 beginnend an die Außenwandung des Hüllrohres 2 an. Dabei umfließt er auch die Absätze 11a bzw. 11b. Nach dem Abkühlen, d. h. beim Herausfahren aus der Heizzone, verhakt sich der dann teilweise verglaste und verfestigte Sootkörper 5 an den Absätzen 11a bzw. 11b. Er sich stützt sich daher auf die Absätze 11a, und später 11b ab und entlastet dadurch den unteren, noch aufzuschmelzenden Teil des Sootkörpers 5 von dem darüber befindlichen Gewicht. Das mit den Absätzen 11a, 11b versehene Hüllrohr 2 wirkt somit als Abrutschsicherung für den aufkollabierenden Sootkörper 5. Je nach Abstand und Anzahl der Absätze 11a ,11b kann auch erreicht werden, daß der Sootkörper 5 durch die Längenkontraktion beim Kollabieren von der Haltefläche 4 abhebt und sich dabei an den Absätzen 11a, 11b aufhängt. Um zu gewährleisten, daß der kollabierte Teil des Sootkörpers möglichst frühzeitig abgekühlt und sich an den Absätzen 11a, 11b verhakt, sollte die Länge der Heizzone innerhalb des Sinterofens, in Richtung der Längsachse 13 des Sootkörpers 5 gesehen, relativ kurz sein, vorteilhafterweise kürzer als der Abstand zwischen der Oberkante 14 des Hüllrohres 2 und dem ersten Absatz 11a.

Bei der Ausführungsform gemäß Figur 2 ist das Hüllrohr 2 aus einem Teil gefertigt. In einer alternativen Ausführungsform besteht es aus drei ineinander steckbaren oder aufeinander stapelbaren Teilen.

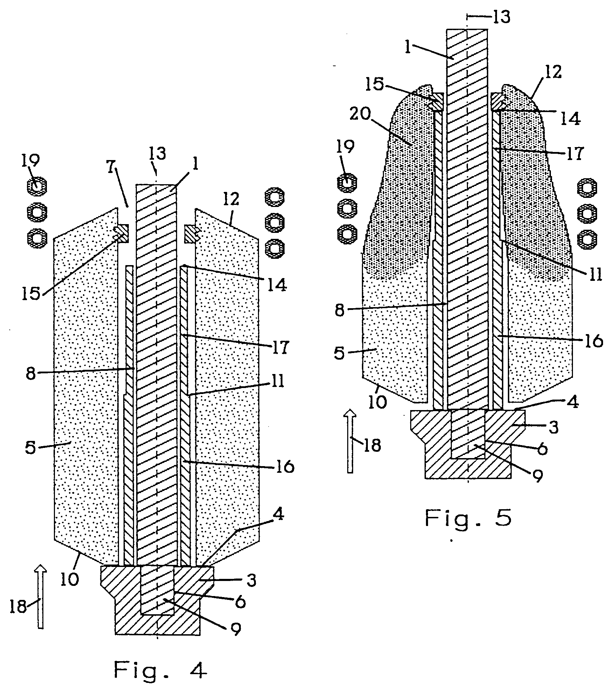

Bei der Ausführungsform der erfindungsgemäßen Vorrichtung gemäß Figur 3 unterscheidet sich von derjenigen gemäß Figur 1 im wesentlichen durch einen zusätzichen Haltering 15, der in der Innenbohrung des Sootkörpers 5 im oberen Teil 12 eingeschraubt ist. Der Haltering 15 hat einen Innendurchmesser, der in etwa dem Innendurchmesser des Hüllrohres 2 entspricht. Die Wirkungsweise des Halteringes 15 beim Kollabieren des Sootkörpers 5 wird nachfolgend anhand der in den Figuren 4 und 5 dargestellten Ausführungsformen der Haltevorrichtung näher erläutert.

In Figur 4 ist ein von einer erfindungsgemäßen Haltevorrichtung gehaltener Sootkörper in einem Verfahrensschritt unmittelbar vor dem ersten Sinterabschnitt, und in Figur 5 der gleiche Sootkörper 5, bereits teilweise gesintert, in einem späteren Sinterabschnitt dargestellt.

Als Hüllrohr ist hier ein zweiteiliges Graphitrohr vorgesehen, dessen unterer Teil 16 einen Außendurchmesser von 50 mm hat und auf den ein oberer Teil 17 mit einem Außendurchmesser von 48 mm lösbar angeordnet ist. Der Übergang von dem Unterteil 16 auf den Oberteil 17 wird somit von einem 1 mm tiefen Absatz 11 gebildet. Etwa 20 cm von der Oberkante 14 des Hüllrohr-Oberteiles 17 beabstandet ist in der Innenwandung des Sootkörpers 5 ein Haltering 15 aus Graphit eingeschraubt.

Der auf der Haltevorrichtung gehaltene Sootkörper 5 wird entlang des Richtungspfeiles 18 in einen Sinterofen eingeführt, dessen Heizzone schematisch durch die Heizleiter 19 dargestellt ist. Die Höhe der Heizzone 19 in Richtung der Längsachse 13 gesehen beträgt nur einen Bruchteil der Gesamtlänge des Sootkörpers 5. Bei der in Figur 4 dargestellten Verfahrensstufe steht der Sootkörper 5 auf der Aufnahmefläche 4 des Haltefußes 3 auf. Der Sootkörper 5 wird in der Heizzone 19 von seinem oberen Ende 12 aus beginnend erhitzt. Der erweichende Sootkörper 5 legt sich dabei an die äußere Mantelfläche der Hüllrohrteile 16; 17 an. In Figur 5 ist der bereits verglaste Teil des Sootkörpers mit der Bezugsziffer 20 bezeichnet.

Der Sootkörper 5 erfährt durch das Sintern eine Durchmesser- und Längenkontraktion. Die Kontraktion des Durchmessers bewirkt, daß der Haltering 15 vom verglasenden Sootkörper 5 fest umschlossen wird. Aufgrund der Längenkontraktion bewegt sich der Haltering 15 relativ in Richtung auf die Oberkante 14 des Hüllrohr-Oberteiles 17 zu. Sobald der Haltering 15 auf der Oberkante 14 des Hüllrohr-Oberteiles 17 aufliegt, bewirkt die weitere Längenkontraktion des Sootkörpers 5, daß sich sein unteres Ende 10 von der Aufnahmefläche 4 abhebt. In diesem Sinterabschnitt, der in Figur 5 dargestellt ist, wird der Sootkörper 5 bzw. der verglaste Teil des Sootkörpers 20 ausschließlich am Haltering 15 hängend gehalten. Das obere Ende 12 hat in diesem Sinterabschnitt die Heizzone 19 bereits verlassen und ist soweit abgekühlt, daß keine Verformungen mehr zu erwarten sind.

Beim weiteren Kollabieren des Sootkörpers 5 umfließt die in der Heizzone 19 erweichende Glasmasse auch den Hüllrohrabsatz 11. Beim Abkühlen verhakt sich der bereits verglaste Teil 20 des Sootkörpers 5 an dem Hüllrohrabsatz 11 und stützt sich darauf ab. Durch das Verhaken Hüllrohrabsatz 11 wird die hängende Halterung des Sootkörpers 5 ergänzt oder weiter nach unten verschoben. Der Hüllrohrabsatz 11 wirkt somit als Abrutschsicherung für den aufkollabierenden Sootkörper 5.

Das erfindungsgemäße Verfahren gewährleistet, daß in dem Sinterabschnitt, in dem das obere Ende 12 des Sootkörpers erweicht, der Sootkörper 5 auf dem Haltefuß 3 stehend gehaltert ist. Weiterhin, daß in dem Sinterabschnitt, in dem das untere Ende 10 des Sootkörpers 5 erweicht, der Sootkörper 5 am Haltering 15 und/oder am Hüllrohrabsatz 11 hängend gehalten wird. Und weiterhin, daß der Übergang von der stehenden auf die hängende Halterung des Sootkörpers 5 automatisch in Folge der Längenkontraktion des Sootkörpers beim Sintern erfolgt.

Die Anwendbarkeit der erfindungsgemäßen Vorrichtung ist nicht auf die Halterung von Hohlzylindern aus Siliciumdioxid - Soot beschränkt. Sie ist auch für die Halterung von Hohlzylindern mit anderer chemischer Zusammensetzung und, wie oben dargelegt, beispielsweise auch zum Kalibrieren des Innendurchmessers von Glasrohren geeignet.

## Patentansprüche

1. Verfahren zum Sintern eines Hohlzylinders aus Siliciumdioxid - Soot, wobei der Hohlzylinder mittels einer Haltevorrichtung in vertikaler Ausrichtung gehalten und kontinuierlich einer Erhitzungszone zugeführt und gesintert wird, dadurch gekennzeichnet, daß der Hohlzylinder (5) in einem zeitlichen Sinterabschnitt, während dem er im Bereich seines oberen Endes (12) gesintert wird, überwiegend oder ausschließlich stehend gehalten wird, indem er von seinem unteren Ende (10) aus gestützt wird, und in einem weiteren Sinterabschnitt, während dem er im Bereich seines unteren Endes (10) gesintert wird, überwiegend oder ausschließlich im Bereich seines oberen Endes (12) hängend gehalten wird.

2. Verfahren nach Anspruch 1, dadurch gekennzeichnet, daß der Hohlzylinder (5) mit seinem oberen Ende (12) beginnend in die Erhitzungszone (19) eingeführt wird.

3. Verfahren nach Anspruch 1 oder 2, dadurch gekennzeichnet, daß am zu sinternden Hohlzylinder (5) im Bereich seines oberen Endes (12) ein Aufhängeelement (15) angreift, daß der Hohlzylinder (5) im Bereich seines unteren Endes (10) von einem Träger (3) abgestützt wird, und daß ein unterhalb des Aufhängeelementes (15) und relativ zum Träger (3) ortsfest angeordnetes Stützelement (2) vorgesehen ist, auf das sich während des ersten Sinterabschnittes das Aufhängeelement (15) infolge der Längenkontraktion des Hohlzylinders (5) zubewegt und auf das es sich zu Beginn des zweiten Sinterabschnittes abstützt.

4. Verfahren nach Anspruch 3, dadurch gekennzeichnet, daß als Aufhängeelement ein Haltering (15) am Hohlzylinder (5) innerhalb dessen Innenbohrung (7) befestigt wird, und daß innerhalb der Innenbohrung (7) des Hohlzylinders (5) ein sich auf dem Träger (3) abstützendes Stützelement (2), eingesetzt wird, das ein oberes, dem Aufhängeelement zugewandtes Ende (14) aufweist, auf dem sich der Haltering (15) im zweiten Sinterabschnitt abstützt.

5. Verfahren nach Anspruch 3 oder 4, dadurch gekennzeichnet, daß die beim Sintern des Hohlzylinders (5) zu erwartende Längenkontraktion ermittelt wird, und daß der Abstand zwischen dem Aufhängeelement (15) und dem Stützelement (2) auf einen Wert im Bereich des 0,3 bis 0,8 fachen der ermittelten Längenkontraktion eingestellt wird.

6. Vorrichtung zum Sintern eines Hohlzylinders aus Siliciumdioxid - Soot in vertikaler Ausrichtung, mit einem von außen in die Bohrung des Hohlzylinders eingreifenden, langgestreckten Trägerkörper, der mit einem Ende mit einem eine Haltefläche aufweisenden Haltefuß verbunden ist, und mit einer Heizeinrichtung, dadurch gekennzeichnet, daß ein sich auf den Haltefuß (3) abstützendens, sich in Längsachsenrichtung des Trägerkörpers (1) nach oben erstreckendes Stützelement (2) vorgesehen ist, das beim Kollabieren des Hohlzylinders (5) als Abrutschsicherung wirkend im Bereich des oberen Endes (12) des Hohlzylinders (5) angreift, und daß in Richtung der Längsachse (13) des Hohlzylinders gesehen, die Länge der Heizeinrichtung (19) kürzer ist als die Länge des Hohlzylinders (5).

7. Vorrichtung nach Anspruch 6, dadurch gekennzeichnet, der der Haltefuß (3) eine vertikal zur Längsachse (13) des Trägerkörpers (1) orientierte Haltefläche (4) aufweist.

8. Vorrichtung nach Anspruch 6 oder 7, dadurch gekennzeichnet, daß der Trägerkörper (1) eine Länge aufweist, die größer ist als die Länge des zu haltenden Hohlzylinders (5).

9. Vorrichtung nach einem der Ansprüche 6 bis 8, dadurch gekennzeichnet, daß der Trägerkörper (1) über mindestens einen Teil seiner Länge von einem gasdurchlässigen, Hüllrohr (2) umhüllt ist.

10. Vorrichtung nach Anspruch 9 dadurch gekennzeichnet daß das Hüllrohr (2) aus Graphit besteht.

11. Vorrichtung nach Anspruch 9 oder 10, dadurch gekennzeichnet, daß das Hüllrohr eine offen Porosität, vorzugsweise im Bereich von 10 Vol.-% bis 20 Vol.% aufweist.

12. Vorrichtung nach einem der Ansprüche 9 bis 11, dadurch gekennzeichnet, daß das Hüllrohr (2) eine sich konisch verjüngende Mantelfläche aufweist.

13. Vorrichtung nach einem der Ansprüche 9 bis 11, dadurch gekennzeichnet, daß das Hüllrohr (2; 16; 17) eine sich stufenweise verjüngende Mantelfläche aufweist.

14. Vorrichtung nach einem der Ansprüche 9 bis 13, dadurch gekennzeichnet, daß zwischen der Außenwand des Trägerkörpers (1) und der Innenwand des Hüllrohres (2) ein Spalt (8) mit einer Spaltweite im Bereich zwischen 0,3 mm und 1 mm, vorzugsweise von weniger als 0,8 mm vorgesehen ist.

15. Vorrichtung nach einem oder mehreren der Ansprüche 6 bis 14, dadurch gekennzeichnet, daß der Trägerkörper (1) aus kohlefaserverstärktem Graphit (CFC) besteht.

16. Vorrichtung nach einem oder mehreren der Ansprüche 6 bis 15, dadurch gekennzeichnet, daß die Aufnahmefläche (4) zentral mit einer Öffnung versehen ist, in die der Trägerkörper (1) mit dem einen Ende (9) eingreift.

17. Vorrichtung nach einem oder mehreren der Ansprüche 6 bis 16, dadurch gekennzeichnet, zur Befestigung am zu haltenden Hohlzylinders (5) in einem Bereich, in Längsachsenrichtung (13) des Trägerkörpers (1) gesehen, oberhalb des Stützelementes (2), ein Halteelement (15) vorgesehen ist.

18. Vorrichtung nach Anspruch 17 und einem der Ansprüche 6, oder 9 bis 14, dadurch gekennzeichnet, daß das Halteelement als ein an der Wandung der Innenbohrung (7) des zu haltenden Hohlzylinders (5) angreifender Haltering (15) ausgebildet ist, daß als Stützelement das Hüllrohr (2) vorgesehen ist, und daß der Innendurchmesser des Halteringes (15) kleiner ist als der Außendurchmesser des Hüllrohres (2).

## Claims

1. A method for sintering a hollow cylinder of silicon dioxide soot, wherein the hollow cylinder is held in vertical alignment by means of a holding device and is supplied continuously to a heating zone and is sintered, characterised in that the hollow cylinder (5) is held predominantly or exclusively upright in a chronological sintering section, during which it is sintered in the region of its upper end (12), by being supported from its lower end (10), and is held suspended, predominantly or exclusively in the region of its upper end (12), in a further sintering section during which it is sintered in the region of its lower end (10).

2. A method according to Claim 1, characterised in that the hollow cylinder (5) is introduced into the heating zone (19) beginning with its upper end (12).

3. A method according to Claim 1 or 2, characterised in that a suspension member (15) engages on the hollow cylinder (5) which is to be sintered, in the region of its upper end (12), that the hollow cylinder (5) is supported in the region of its lower end (10) by a support (3), and that a support member (2) is provided, arranged beneath the suspension member (15) and fixed relative to the support (3), towards which the suspension member (15) moves during the first sintering section as a result of the longitudinal contraction of the hollow cylinder (5) and onto which it rests at the start of the second sintering section.

4. A method according to Claim 3, characterised in that a holding ring (15) is fastened, as suspension member, to the hollow cylinder (5) within its inner bore (7), and that within the inner bore (7) of the hollow cylinder (5) a support member (2) is inserted, resting on the support (3), which support member (2) has an upper end (14) facing the suspension member, on which end (14) the holding ring (15) rests in the second sintering section.

5. A method according to Claim 3 or 4, characterised in that the longitudinal contraction is determined which is to be expected on sintering the hollow cylinder (5), and that the distance between the suspension member (15) and the support member (2) is set at a value in the range of 0.3 to 0.8 times the determined longitudinal contraction.

6. A device for sintering a hollow cylinder of silicon dioxide soot in vertical alignment, with an elongated support body, engaging from the exterior into the bore of the hollow cylinder, which support body is connected by one end with a holding foot having a holding surface, and with a heating device, characterised in that a support member (2) is provided, resting on the holding foot (3) and extending upwards in the longitudinal axis direction of the support body (1), which support member (2) engages in the region of the upper end (12) of the hollow cylinder (5) on collapse of the hollow cylinder (5), acting as a protection against slipping, and that, viewed in the direction of the longitudinal axis (13) of the hollow cylinder, the length of the heating device (19) is shorter than the length of the hollow cylinder (5).

7. A device according to Claim 6, characterised in that the holding foot (3) has a holding surface (4) oriented vertically to the longitudinal axis (13) of the carrier body (1).

8. A device according to Claim 6 or 7, characterised in that the carrier body (1) has a length which is greater than the length of the hollow cylinder (5) which is to be held.

9. A device according to one of Claims 6 to 8, characterised in that the support body (1) is encased with a gas-permeable casing tube (2) over at least a portion of its length.

10. A device according to Claim 9, characterised in that the casing tube (2) consists of graphite.

11. A device according to Claim 9 or 10, characterised in that the casing tube has an open porosity, preferably in the range of 10 % by volume to 20 % by volume.

12. A device according to one of Claims 9 to 11, characterised in that the casing tube (2) has a conically narrowing covering surface.

13. A device according to one of Claims 9 to 11, characterised in that the casing tube (2; 16; 17) has a covering surface narrowing in stages.

14. A device according to one of Claims 9 to 13, characterised in that between the outer wall of the support body (1) and the inner wall of the casing tube (2) a gap (8) is provided, having a gap width in the range between 0.3 mm and I mm, preferably of less than 0.8 mm.

15. A device according to one or more of Claims 6 to 14, characterised in that the support body (1) consists of carbon-fibre-reinforced graphite (CFC).

16. A device according to one or more of Claims 6 to 15, characterised in that the mounting surface (4) is provided centrally with an opening into which the support body (1) engages by one end (9).

17. A device according to one or more of Claims 6 to 16, characterised in that a holding member (15) is provided for fastening on the hollow cylinder (5) which is to be held, in a region, viewed in longitudinal axis direction (13) of the support body (1), above the support member (2).

18. A device according to Claim 17 and one of Claims 6, or 9 to 14, characterised in that the holding member is constructed as a holding ring (15) engaging against the wall of the inner bore (7) of the hollow cylinder (5) which is to be held, that the casing tube (2) is provided as support member, and that the internal diameter of the holding ring (15) is smaller than the external diameter of the casing tube (2).

## Revendications

1. Procédé pour le frittage d'un barreau creux en suie de silice, le barreau creux étant maintenu à la verticale par un dispositif de retenue et étant amené en continu à une zone de chauffe pour y être fritté, caractérisé en ce que le barreau creux (5) est maintenu principalement ou exclusivement à la verticale dans une phase temporelle de frittage pendant laquelle il est fritté dans la zone de son extrémité supérieure (12), en prenant appui, par son extrémité inférieure (10) et en ce qu'il est maintenu essentiellement ou exclusivement accroché dans la zone de son extrémité supérieure (12) dans une autre phase de frittage au cours de laquelle il est fritté dans la zone de son extrémité arrière (10).

2. Procédé selon la revendication 1, caractérisé en ce que le barreau creux (5) est inséré pour commencer dans la zone de chauffe (19) par son extrémité supérieure (12).

3. Procédé selon la revendication 1 ou 2, caractérisé en ce que le barreau creux (5) à fritter est appréhendé dans la zone de son extrémité supérieure (12) par un élément d'accrochage (15), en ce que le barreau creux (5) prend appui dans la zone de son extrémité inférieure (10) par un support (3) et en ce qu'il est prévu un élément d'appui (2) qui est disposé en dessous de l'élément d'accrochage (15) et fixe par rapport au support (3), en direction duquel se déplace l'élément d'accrochage (15) pendant la première phase de frittage à la suite d'une contraction en longueur du barreau creux (5) et sur lequel il prend appui au début de la seconde phase de frittage.

4. Procédé selon la revendication 3, caractérisé en ce qu'en tant qu'élément d'accrochage, un anneau de retenu (15) est fixé sur le barreau creux (5) à l'intérieur de son perçage interne (5) et en ce qu'à l'intérieur du perçage interne (7) du barreau creux (5) est inséré un élément d'appui (2) qui repose sur le support (3) et qui présente une extrémité supérieure (14), tournée vers l'élément d'accrochage, extrémité sur laquelle l'anneau de retenue (15) prend appui dans la seconde phase de frittage.

5. Procédé selon la revendication 3 ou 4, caractérisé en ce que lors du frittage du barreau creux (5), on détermine la contraction longitudinale escomptée et en ce que la distance entre l'élément d'accrochage (15) et l'élément d'appui (2) est ajustée à une valeur comprise entre 0,3 et 0,8 fois la contraction longitudinale déterminée.

6. Dispositif pour le frittage d'un barreau creux en suie de silice orienté verticalement comprenant un corps porteur allongé qui s'engage par l'extérieur dans le perçage du barreau creux et qui est relié à une extrémité à un socle présentant une surface d'appui, et comprenant un dispositif de chauffage, caractérisé en ce qu'il est prévu un élément d'appui (2) qui repose sur le socle (3) en s'étendant vers le haut dans le sens axial longitudinal du corps porteur (1) et qui agit comme une sécurité anti-glissement dans la zone de l'extrémité supérieure (12) du barreau creux (5) au moment de l'écroulement du barreau creux (5) et en ce que, vu dans le sens de l'axe longitudinal (13) du barreau creux, la longueur du dispositif de chauffage (19) est inférieure à la longueur du barreau creux (5).

7. Dispositif selon la revendication 6, caractérisé en ce que le socle (3) présente une surface d'appui (4) orientée verticalement par rapport à l'axe longitudinal (13) du corps porteur (1).

8. Dispositif selon la revendication 6 ou 7, caractérisé en ce que le corps porteur (1) présente une longueur qui est supérieure à la longueur du barreau creux (5) à maintenir.

9. Dispositif selon l'une des revendications 6 à 8, caractérisé en ce que le corps porteur (1) est entouré sur au moins une partie de sa longueur par un tube d'enrobage (2) perméable au gaz.

10. Dispositif selon la revendication 9, caractérisé en ce que le tube de d'enrobage (2) se compose de graphite.

11. Dispositif selon la revendication 9 ou 10, caractérisé en ce que le tube de d'enrobage présente une porosité ouverte de préférence comprise entre 10 % en volume et 20 % en volume.

12. Dispositif selon l'une des revendications 9 à 11, caractérisé en ce que le tube de d'enrobage (2) présente une surface d'enveloppe s'effilant en forme de cône.

13. Dispositif selon l'une des revendications 9 à 11, caractérisé en ce que le tube de d'enrobage (2 ; 16 ; 17) présente une surface d'enveloppe diminuant par paliers.

14. Dispositif selon l'une des revendications 9 à 13, caractérisé en ce que la paroi externe du corps porteur (1) et la paroi interne du corps gainant (2) est prévue une fente (8) de largeur comprise entre 0,3 mm et 1 mm, de préférence inférieure à 0,8 mm.

15. Dispositif selon une ou plusieurs des revendications 6 à 14, caractérisé en ce que le corps porteur (1) se compose de graphite renforcé aux fibres de carbone (CFC).

16. Dispositif selon une ou plusieurs des revendications 6 à 15, caractérisé en ce que la surface d'application (4) est munie au centre d'une ouverture dans laquelle s'engage l'extrémité (9) du corps porteur (1).

17. Dispositif selon une ou plusieurs revendications 6 à 16, caractérisé en ce qu'il est prévu un élément de retenue (15) pour la fixation du barreau creux (5) à maintenir dans une zone vue dans le sens longitudinal axial (13) du corps porteur (1) au-dessus de l'élément d'appui (2).

18. Dispositif selon la revendication 17 ou l'une des revendications 6 ou 9 à 14, caractérisé en ce que l'élément de retenue est conçu comme un anneau de retenue (15) agissant au niveau de la paroi du perçage interne (7) du barreau creux (5) à maintenir de sorte qu'il est prévu que le tube de d'enrobage serve d'élément d'appui et que le diamètre interne de l'anneau de retenue (15) soit inférieur au diamètre externe du tube d'enrobage (2).
